(19) Europäisches Patentamt
European Patent Office
Office européen des brevets

(11) Publication number : **0 211 067 B1**

(12) # EUROPEAN PATENT SPECIFICATION

(45) Date of publication of patent specification : **13.03.91 Bulletin 91/11**

(51) Int. Cl.$^5$ : **C08F 230/08**, C08F 299/08, G02B 1/04

(21) Application number : **86901226.0**

(22) Date of filing : **28.01.86**

(86) International application number : **PCT/US86/00199**

(87) International publication number : **WO 86/04342 31.07.86 Gazette 86/17**

(54) **OXYGEN-PERMEABLE LENSES.**

(30) Priority : **29.01.85 US 696014**
**09.08.85 US 764421**

(43) Date of publication of application : **25.02.87 Bulletin 87/09**

(45) Publication of the grant of the patent : **13.03.91 Bulletin 91/11**

(84) Designated Contracting States : **AT BE CH DE FR GB IT LI LU NL SE**

(56) References cited :
EP-A- 0 114 894
GB-A- 2 111 241
GB-A- 2 119 951
US-A- 4 303 772
US-A- 4 390 676

(73) Proprietor : **Bausch & Lomb Incorporated**
**42 East Avenue P.O. Box 743**
**Rochester New York 14603 (US)**

(72) Inventor : **STOYAN, Nick**
**3841 Diamonte Place**
**Encino, CA 91416 (US)**

(74) Representative : **Allam, Peter Clerk et al**
**LLOYD WISE, TREGEAR & CO. Norman House**
**105-109 Strand**
**London WC2R 0AE (GB)**

**EP 0 211 067 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Background of the Invention

The present invention is directed to eye-compatible lenses, particularly hard contact lenses having excellent oxygen permeability and wettability.

Contact lenses presently on the market are classified into two large groups : soft contact lenses and hard contact lenses. Hard contact lenses are better able than soft contact lenses to retain visual characteristics, but are less comfortable. The art has sought to increase oxygen permeability of hard contact lenses, to extend the length of time they can be worn without causing corneal damage or discomfort.

One proposed solution has been the formation of a copolymer of methyl methacrylate and a siloxane methacrylate compound. This solution has been less than satisfactory, since the lenses offered are not as hard, rigid, nor wettable as lenses formed from polymethyl methacrylate. In addition, such lenses are fragile and have poor mechanical processability.

The object of the present invention is to overcome the deficiencies in the state of the art by offering lenses having a high degree of oxygen permeability, excellent wettability, and, if desired, ultraviolet absorption. The primary benefit of UV absorptivity is the resistance to user development of cataracts.

Summary of the Invention

The present invention is directed to oxygen-permeable lenses formed of a copolymer consisting of :

(a) an organosilicon-monomer system present in an amount of from 10 to 40 percent by weight, which comprises at least one monomer selected from the group consisting of unsaturated organosilicon monomer selected from alkyl or aryl siloxanes containing one or more unsaturated polymerizable group(s) having the formula :

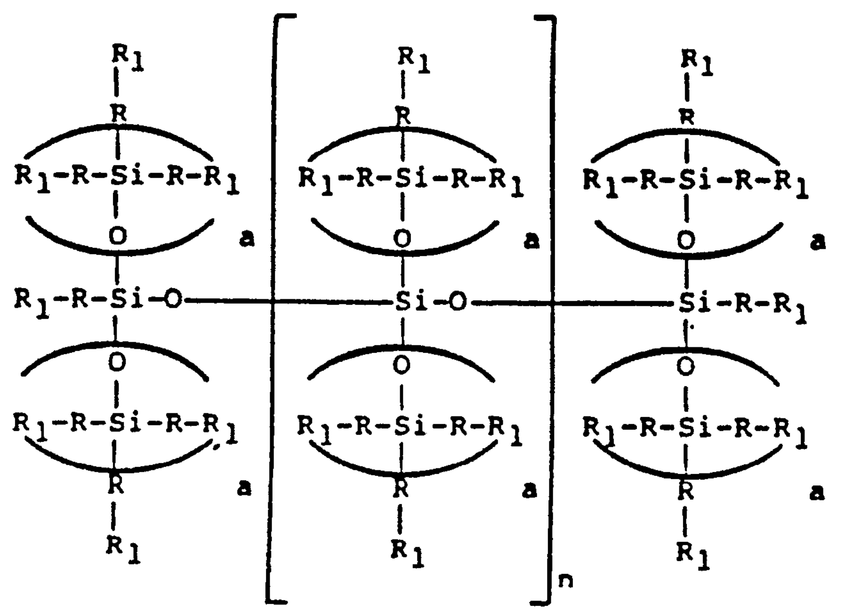

wherein :

each $R_1$ is independently selected from an unsaturated polymerizable methacrylate, acrylate group, hydrogen, acetoxy, carbomethoxy, glycidoxy, glyceryl and carboxy, and in which at least one $R_1$ is acetoxy, carbomethoxy, glycidoxy, glyceryl or carboxy ;

each R is independently an alkylene or cycloalkylene group having from 1 to 10 carbon atoms, or an arylene group ;

each a is independently an integer from 0 to 10 ; and

n is an integer from 0 to 10, siloxyl alkyl esters of the formula :

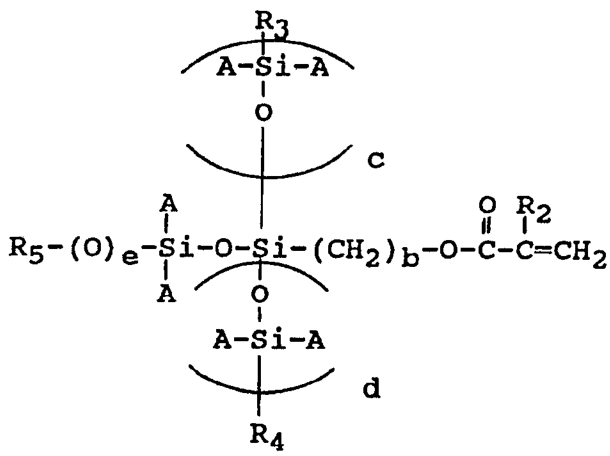

wherein :

$R_2$ is selected from the group consisting of hydrogen and methyl ;
b is an integer from 1 to 3 ;
c and d are 0, 1 or 2 ;
e is 0 or 1 ; and
A, $R_3$, $R_4$ and $R_5$ are selected from the group consisting of methyl and phenyl, and/or

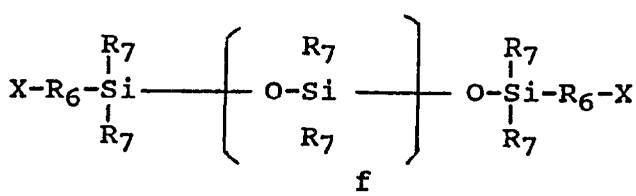

wherein :

X is an unsaturated group ;
$R_6$ is a divalent hydrocarbon radical having from 1 to about 22 carbon atoms ;
$R_7$ is the same or different, and each is selected from the group consisting of a monovalent hydrocarbon radical having from 1 to about 12 carbon atoms, and a halogen-substituted monovalent hydrocarbon radical having from 1 to about 12 carbon atoms ; and
f is 0 or greater ;

(b) at least one hydrophilic monomer present in an amount sufficient to provide in the resultant polymer a contact angle of less than 45° ;
(c) at least one crosslinking monomer, the total of crosslinking monomer being present in an amount up to 5 percent by weight based on the total weight of the monomers ;
(d) at least one fluoroorgano monomer of the formula :

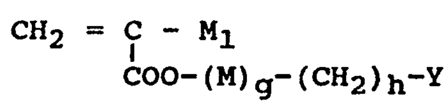

wherein :

$M_1$ is hydrogen, alkyl, fluoroalkyl, alkyl carboxy, carboxy ester, alkyl carboxy ester, fluorinated carboxy ester, fluorinated cyano, alkyl carboxy ester, or phenyl ;
M is hydroxy alkyl, alkyl ether, or hydroxy alkyl ether ;
g is 0 or 1 ;
h is from 0 to 4 ; and
Y is a fluorocarbon group, preferably containing from 2 to 21 fluorine atoms ;

(e) optionally one or more additional monomers to modify the properties of the lens in an amount not exceeding 50 percent by weight of the concentration of the fluoroorgano monomer ; and

(f) from 0 to 20 percent by weight in total of at least one UV-absorbing agent ;
wherein said percentages are based on the total weight of monomers and UV-absorbing agent, if any, present.

There may be desirably included in the lens composition, as component (e), monomers such as acrylates methacrylates, itaconic esters, styrenes, fluorinated styrenes, alkyl styrenes and fluorinated alkyl styrenes, in a concentration not exceeding 50 percent by weight of the concentration of the fluoroorgano monomer, typically in a concentration of up to 5 percent by weight based on the total weight of the UV-absorbing agent (if any) and the monomers. Such monomers are used to modify properties such as hardness, machinability, wettability, oxygen permeability and the like.

It is desired that the lens have a Shore D hardness greater than about 78, preferably from about 80 to about 85.

It is desired to provide an oxygen permeability at 35°C greater than $15 \times 10^{-11}$ ($cm^2$/sec/)(m1 $O_2$/m1 × mm Hg). When using low-cost fluoroorgano compounds such as 2,2,2-trifluoroethylmethacrylate, the organosilicon content of the monomer system must be high, typically in the range of from 25 percent to 30 percent or more by weight based on the total weight of the UV-absorbing agent and the monomers. Organosilicon monomer content can be advantageously reduced, however, by inclusion of high-performance fluoroorganomonomers such as hexafluoroisopropylmethacrylate.

## Detailed Description

As noted above, the present invention is directed to eye-compatible, i.e. ocular-compatible, lenses, in particular hard contact lenses, formed of an interpolymerized amount of at least one organosilicon monomer, at least one fluoroorgano compound, at least one hydrophilic monomer and at least one crosslinking monomer. Other reactive monomers such as acrylates, methacrylates, itaconic esters, styrenes, fluorinated styrenes, alkyl styrenes, fluorinated alkyl styrenes and the like, may be included as part of the polymerizable composition, in the limited amounts defined above, to achieve a lens of desired hardness, wettability, oxygen permeability and machinability. Also a UV-absorbing agent which is preferably a monomer of benzotriazole and/or benzophenone may be advantageously included.

The organosilicon monomers which may be used in accordance with the instant invention are those of formula (1) defined above.

In formula (1) :
(a) each $R_1$ is preferably acetoxy or carbomethoxy ;
(b) when R is arylene, the phenylene group is preferred ; and
(c) f can range up to 800, but is preferably less than about 25 for hard lenses.

Illustrative, but no wise limiting, of the organo- silicon monomers which may be used in accordance with the invention there may be mentioned :
1-Y-methacryloxymethyl-3-(3-acetoxypropyl)-1,1,3,3-tetramethyldisiloxane,
Y-methacryloxypropyl-bis(trimethylsiloxy)-(3-acetoxypropyldimethylsiloxy)silane,
Y-methacryloxypropyl-bis(trimethylsiloxy)-(3-carbomethoxypropyldimethylsiloxy)silane,
Y-methacryloxypropyl-bis(trimethylsiloxy)-(3-hydroxypropyldimethylsiloxy)silane,
Y-methacryloxypropyl-bis(trimethylsiloxy)-(3-carboxypropyldimethylsiloxy)silane,
Y-methacryloxypropyl-bis(3-acetoxypropyldimethylsiloxy) -(trimethylsiloxy)silane,
Y-methacryloxypropyl-bis(3-carbomethoxypropyldimethylsiloxy)-(trimethylsiloxy)silane,
Y-methacryloxypropyl-bis(3-hydroxypropyldimethylsiloxy) -(trimethylsiloxy)silane,
Y-methacryloxypropyl-bis(3-carboxypropyldimethylsiloxy) -(trimethylsiloxy)silane,
Y-methacryloxypropyl-tris(3-acetoxypropyldimethylsiloxy)silane,
Y-methacryloxypropyl-tris(3-carbomethoxypropyldimethylsiloxy)silane,
Y-methacryloxypropyl-tris(3-hydroxypropyldimethylsiloxy) silane,
Y-methacryloxypropyl-bis(pentamethyldisiloxanyl)(3-acetoxypropyldimethylsiloxy)silane,
Y-methacryloxypropyl-bis(pentamethyldisiloxanyl)(3-carbomethoxypropyldimethylsiloxy)silane,
Y-methacryloxypropyl-bis(pentamethyldisiloxanyl)(3-hydroxypropyldimethylsiloxy)silane,
Y-methacryloxypropyl-bis(pentamethyldisiloxanyl)(carboxypropyldimethylsiloxy)silane,
1-(Y-methacryloxypropyl)-3-(3-acetoxypropyl)-tetra(tri methylsiloxy)disiloxane,
1-(Y-methacryloxypropyl)-3-(3-carbomethoxypropyl)-tetra (trimethylsiloxy)disiloxane,
1-(Y-methacryloxypropyl)-3-(3-hydroxypropyl)-tetra(trimethylsiloxy)disiloxane,
1-(β-methacryloxypropyl)-3-(3-carboxypropyl)-tetra(trimethylsiloxy)disiloxane,
1,3-bis(Y-methacryloxypropyl)-1,1,3,3-tetra(3-acetoxypropyldimethylsiloxy)disiloxane,
Y-methacryloxypropyl-tris(4-acetoxyphenyldimethylsiloxy)silane,

Y-methacryloxypropyl-tris(2-carboxyethyldimethylsiloxy)silane
Y-methacryloxypropyl-tris(2-acetoxyethyldimethylsiloxy)silane
methacryloyloxymethylpentamethyldisiloxane,
methacryloyloxypropyl-tris(trimethylsilyl)siloxane,
methacryloyloxymethylheptamethylcyclotetrasiloxane,
methacryloyloxypropylheptamethylcyclotetrasiloxane, and the like, and activated unsaturated group end-capped polysiloxanes, i.e., monomers prepared by equilibrating the appropriately substituted disiloxane, for example, 1,3- bis(4-methacryloxybutyl)tetramethyldisiloxane, with a suitable amount of a cyclic diorganosiloxane, e.g., hexamethylcyclotrisiloxane, octaphenylcyclotetrasiloxane, hexaphenylcyclotrisiloxane, 1,2,3-trimethylcyclotrisiloxane, 1,2,3-triphenylcyclotrisiloxane, 1,2,3,4- tetramethylcyclotrisiloxane, 1,2,3,4-tetraphenylcyclotetrasiloxane and the like, in the presence of an acid or base catalyst, as more particularly defined in U.S. Patents 4,142,508 and 4,463,141 to Ellis, and 4,153,641 to Deichert et al. all incorporated herein by reference.

While concentrations of organosilicon monomers may range from about 10 to about 40 parts by weight based on the total weight of the UV-absorbing agent, if employed, and the monomers, the preferred range is from about 10 to about 35, more preferably from about 20 to about 30 parts by weight. Oxygen permeability (all other factors being constant) will increase with an increase in organosilicon monomer content. At higher levels, the lens becomes more difficult to machine, requiring the inclusion of monomers as part of the monomer system as mentioned above, to yield a lens having a Shore D hardness greater than about 78, preferably from about 80 to about 85.

The fluoroorgano monomers utilised in the practice of the instant invention are compounds of the formula:

$$CH_2 = \underset{\displaystyle COO-(M)_g-(CH_2)_h-Y}{\overset{|}{C}} - M_1 \qquad (4)$$

wherein : M, M, g, h, and Y are all as previously defined.

Preferably, Y has the formula :

$$C_nF_{2n+1} \text{ or } C_nF_{2n}H.$$

wherein n is an integer from 1 to 10.

Illustrative of fluoroorgano monomers are : 2,2,2-trifluoroethylmethacrylate, hexafluorobutylmethacrylate, hexafluoroisopropylmethacrylate, pentafluoro-n-propylmethacrylate and the like. Trifluoroisopropylmethacrylate is the preferred monomer for oxygen permeability with 2,2,2-trifluoroethylmethacrylate being preferred for cost. Perfluoro or fluorinated styrenes may also be used.

Hydrophilic monomers are included in the composition to enhance wettability. They preferably comprise an unsaturated carboxylic acid, most preferably methacrylic acid, for compatability of monomers and wearer comfort. Acrylic acid is functional but less desirable. Other monomers such as 2-hydroxyethylmethacrylate and the like may be used. Concentration may be from about 0.1 to about 15 or more percent by weight, preferably from about 2 to about 10 percent by weight based on the total weight of the UV-absorbing agent and the monomers. The exact amount of hydrophilic monomer present depends on the amount, if any, of UV-absorbing agent employed, as the latter also has the capability of being a hydrophilic agent.

A further component is a crosslinking monomer which is a crosslinking agent, preferably a silicon monomer, present in an amount up to about 5, preferably up to about 2, percent by weight.

As noted above, at least one UV-absorbing agent may be included in the lens polymer composition. The UV-absorbing agent may be incorporated as a monomer which then undergoes polymerization when the lens composition is polymerized, or as a pre-polymerized homopolymer or copolymer.

In the polymerized state, the UV-absorbing monomers act as a UV filter or screen capable of preventing UV transmission to the eye. It is important that in this regard most of the complications associated with cornea aphakia and retina problems can be prevented. In addition, the phenolic moiety in the preferred UV-absorbing agents enhances wettability of the lens. Moreover, being compatible with the other monomers, the UV-absorbing monomers are readily copolymerized and permanently retained in the polymer chain. Migration to the polymer surface and leaching are avoided.

Whether in monomeric or in polymeric form, the concentration of UV-absorbing agent may range from 0

to about 20 percent by weight, preferably from about 0.1 to about 20 percent by weight, more preferably from about 2 to about 10 percent by weight based on the total weight of the monomers. The UV-absorbing agents used herein are preferably in a polymerized form and cooperate with the hydrophilic monomer to induce wettability and antisepticability, i.e. self-sterilizable, in consequence of hydroxy-substituted benzene moieties. In the polymerized state, the UV absorbers absorb in the range of from about 300 nm to about 450 nm, preferably with no less than about 70% UV radiation at 370 nm. Preferred UV-absorbing agents are, or are formed of, monomers of the formula :

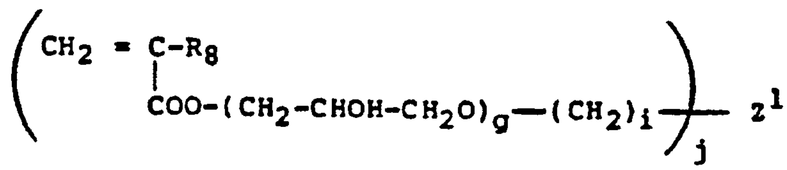 (5)

wherein :

$R_8$ is hydrogen or methyl ;
g is 0 or 1 ;
i is from about 1 to 4 ;
j is 1 or 2 ; and
$Z^1$ is :

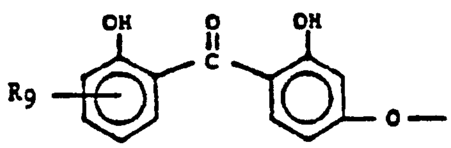 ;

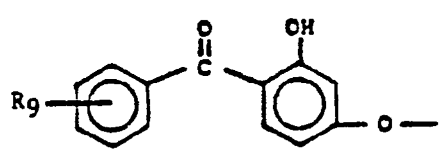 ; or 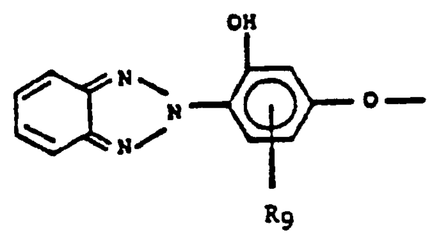

wherein :

$R_9$ is hydrogen ; an alkyl, preferably a $C_1$-$C_5$ alkyl or hydroxyl. In the alternative or in addition, there may be employed a phenyl benzotriazole of the formula :

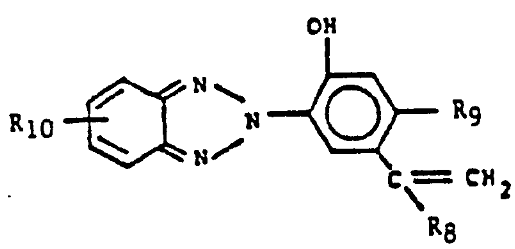

wherein :

$R_8$ and $R_9$ are as defined above, and $R_{10}$ is H or alkyl, preferably a $C_1$-$C_{10}$ alkyl, or hydroxyl.

Preferred UV absorbers include :

2-hydroxy-4-(2-methacryloyloxyethoxy)benzophenone,
2-hydroxy-4-(2-acryloyloxyethoxy)benzophenone,
2-hydroxy-4-(2-hydroxy-3-methacryloxypropyl)benzophenone,
2-(2-hydroxy-5-vinylphenyl)-2H-benzotriazole, and the like.

The UV-absorbing agents are either part of the monomer system or are high-molecular-weight, non-polymerizable homopolymers or copolymers preferably containing such monomers as described above or other UV-absorbing units. They are reacted as such with the polymerizable monomer system and are entrained in the polymerization product.

The lenses of the instant invention preferably are formulated to have high oxygen permeability (Dk) of at least about 15 and preferably greater than 50, as expressed in units of $10^{-11}$ ($cm^2$/sec.) (ml $O_2$ × mm Hg) and as determined at 35°C. Such values can be achieved using high concentrations of the organonosilicon monomer and/or selection of the fluoroorgano monomer. However, with compositions of high organosiliconmonomer content there are displayed increased brittleness and a reduction in capability to undergo machining. At least one crosslinking agent, such as a multi-functional organosilicon monomer, a fluoroorgano monomer, or other modifying monomer, is then employed in an amount sufficient to control hardness of the lens, preferably in the range of Shore D hardness of from about 80 to about 85. A highly multifunctional organosilicon monomer is preferred, as it does not interfere with oxygen permeability. Other crosslinking agents which may be used include ethylene glycol dimethacrylate, ethylene glycol diacrylate, diethylene glycol dimethacrylate, diethylene glycol diacrylate, and the like.

Lens formation is by free radical polymerization such as azobisisobutyronitrile (AIBN) and peroxide catalysts under conditions set forth in U.S. Patent 3,808,179, incorporated herein by reference. Colorants and the like may be added prior to monomer polymerization. It is preferred to form the lens base in sheet form between layers of a non-adherent surface. The sheet is cut into smaller lense precursors from which the lens is ground to user specifications. Spin-casting, as described for instance in U.S. Patent 3,408,429, incorporated herein by reference, may also be used.

Because of high oxygen permeability and wettability, and UV absorbance if desired, the lenses formed in accordance with the instant invention may be used for any lens application desired.

In any instance, oxygen-permeability values of the lens may be determined using a test method developed by Dr. Irving Fatt of Berkeley, California, and disclosed in the paper, entitled : "Oxygen Transmissibility and Permeability of Gas Permeable Hard Contact Lenses and Materials" by Irving Fatt, Ph.D., International Contact Lens Clinic, Vol. 11, No. 3, March 1984. The instrument 15 a polarographic cell with a curved surface for finished lenses, polarographic amplifier, recorder and a constant temperature chamber equipped with a temperature control unit. The measurements are made at 35°C and the units of oxygen permeability (Dk) are ($cm^2$/sec.)(ml $O_2$/ml × mm Hg).

The water wettability of the contact lens material 15 determined by the sesile drop method using a RameHart goniometer with an environmental chamber. Both the advancing and the receding contact angles are determined.

The hardness is measured as Shore D at 22°C using a hardness tester, and percent light transmission is measured using a recording spectrophotometer.

The absorption spectra of the copolymers are determined on a "Perkin Elmer" UV-Vis spectrophotometer using 0.1-0.15 mm-thin optically polished discs. The amount of materials extractable from the lenses is evaluated by first storing them in a saline solution for 10 days at 35°C. The lenses are then rinsed with distilled water, dried, weighed, and placed in stoppered, 25cc volumetric flasks, again containing saline as the extracting medium. The saline is analyzed daily for its extracted ultraviolet absorber by placing 4cc of the extract in a spectrophotometer cell and determining the absorption at 320 nm. The absorption values are compared against the calibration curve made for the pure ultraviolet absorber. Extractables can also be determined by the Soxhlet extraction method, using water as the solvent.

Leachability-diffusibility may be evaluated by cytotoxicity assay-agar overlay method.

The assay is based on the method described by Guess, W.L., Rosenbluth, S.A., Schmidt, B., and Autian, J., in "Agar Diffusion Method for Toxicity Screening of Plastics on Cultured Cell Monolayers", J. Pharm. Sci. 54 : 1545-1547, 1965, incorporated herein by reference, and is designed to detect the response of a mammalian monolayer cell culture to readily diffusible components from materials or test solutions applied to the surface of an agar layer overlaying the monolayer.

The response of the cell monolayer is evaluated, with respect to the discoloration of the red-stained monolayer, under and around the sample when the petri dish is viewed against a white background. Loss of color of the stained cells is considered to be a physiologically significant reaction of the cells. The extent of discoloration is confirmed by examination of the monolayer on an inverted microscope, and the extent of lysis of the cells within the discoloration zone is estimated. Typically, discoloration of cells precedes lysis, as manifested by a region and a region showing lysis. A sample is reported as "cytotoxic" only if lysis is observed.

## Claims

1. An oxygen-permeable lens formed of a copolymer consisting of:

a) an organosilicon-monomer system present in an amount of from 10 to 40 percent by weight, which comprises at least one monomer selected from the group consisting of unsaturated organosilicon monomer selected from alkyl or aryl siloxanes containing one or more unsaturated polymerizable group(s) having the formula:

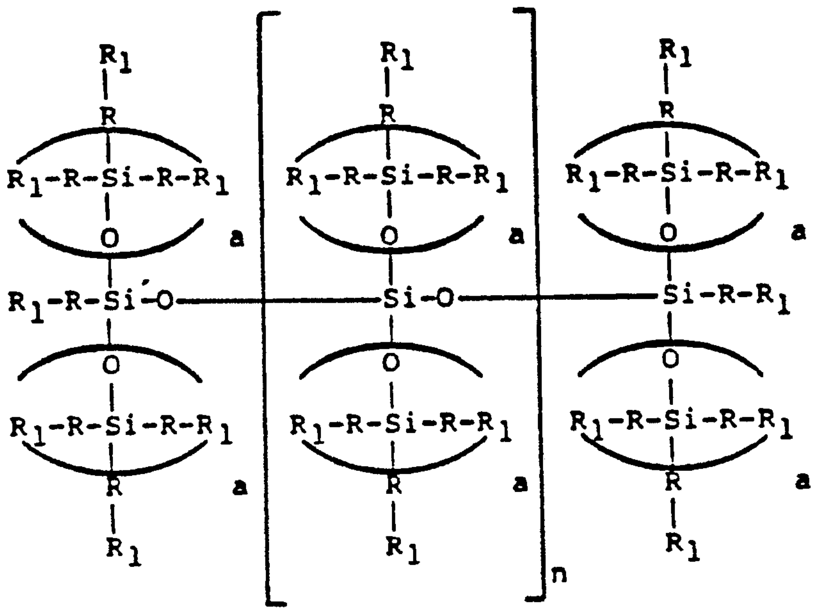

wherein:

each $R_1$ is independently selected from an unsaturated polymerizable methacrylate, acrylate group, hydrogen, acetoxy, carbomethoxy, glycidoxy, glyceryl, and carboxy, and in which at least one $R_1$ is acetoxy, carbomethoxy, glycidoxy, glyceryl, or carboxy;

each R is independently an alkylene or cycloalkylene group having from 1 to 10 carbon atoms, or an arylene group;

each a is independently an integer from 0 to 10; and

n is an integer from 0 to 10, siloxyl alkyl esters of the formula:

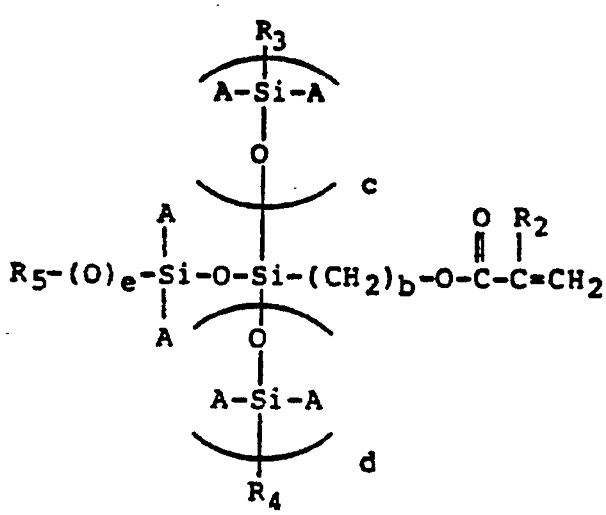

wherein:

$R_2$ is selected from the group consisting of hydrogen and methyl;

b is an integer from 1 to 3;

c and d are 0, 1 or 2 ;
e is 0 or 1 ; and
A, $R_3$, $R_4$ and $R_5$ are selected from the group consisting of methyl and phenyl, and/or

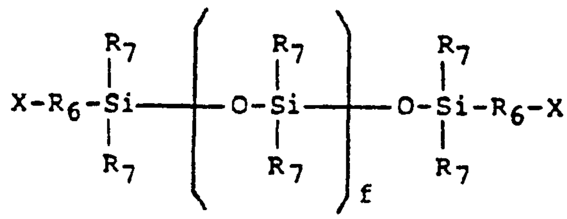

wherein :
X is an unsaturated group ;
$R_6$ is a divalent hydrocarbon radical having from 1 to 22 carbon atoms ;
$R_7$ is the same or different, and each is selected from the group consisting of a monovalent hydrocarbon radical having from 1 to 12 carbon atoms, and a halogen-substituted monovalent hydrocarbon radical having from 1 to 12 carbon atoms ; and
f is 0 or greater ;

b) at least one hydrophilic monomer present in an amount sufficient to provide in the resultant polymer a contact angle of less than 45° ;
c) at least one crosslinking monomer, the total of crosslinking monomer being present in an amount up to 5 percent by weight based on the total weight of the monomers ;
d)at least one fluoroorgano monomer of the formula :

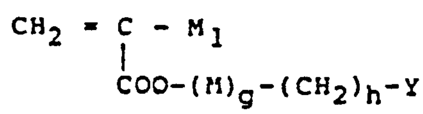

wherein :
$M_1$ is hydrogen, alkyl, fluoroalkyl, alkyl carboxy, carboxy ester, alkyl carboxy ester, fluorinated carboxy ester, fluorinated cyano, alkyl carboxy ester, or phenyl ;
M is hydroxy alkyl, alkyl ether, or hydroxy alkyl ether ;
g is 0 or 1 ;
h is from 0 to 4 ; and
Y is a fluorocarbon group, preferably containing from about 2 to 21 fluorine atoms ;

(e) optionally one or more additional monomers to modify the properties of the lens in an amount not exceeding 50 percent by weight of the concentration of the fluoroorgano monomer ; and
(f) from 0 to 20 percent by weight in total of at least one UV-absorbing agent ;
wherein said percentages are based on the total weight of monomers and UV-absorbing agent, if any, present.

2. An oxygen-permeable lens as claimed in Claim 1, in which at least one UV-absorbing agent is present in an amount of from 0.1 to 20 percent by weight based on the weight of the UV-absorbing agent and the monomers.

3. An oxygen-permeable lens as claimed in Claim 1 or Claim 2, in which the UV-absorbing agent comprises a polymerized amount of at least one monomer selected from the group consisting of a hydroxybenzophenone or benzotriazole of the formula :

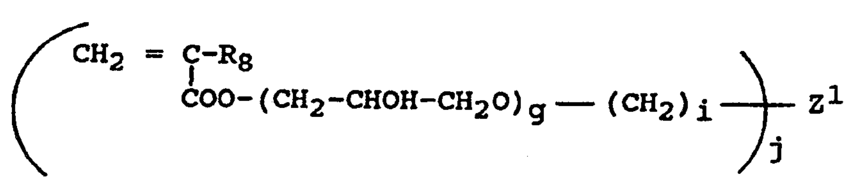

wherein $R_8$ is hydrogen or methyl, g is 0 or 1, i is selected from 1 to 4, j is 1 or 2 and $Z^1$ is :

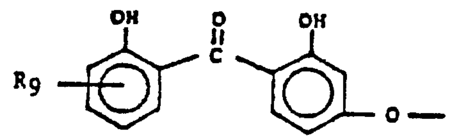

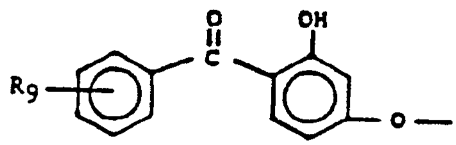

; or

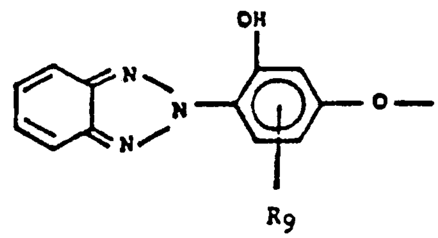

wherein $R_9$ is hydrogen, alkyl or hydroxy ; and a phenyl benzotriazole of the formula :

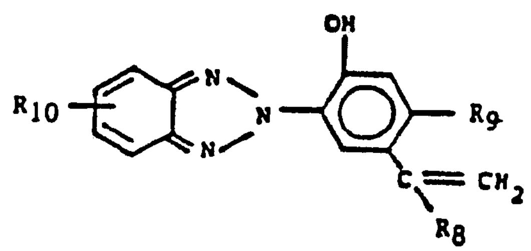

wherein $R_8$ and $R_9$ are as defined above, and $R_{10}$ is H, alkyl, preferably a $C_1$-$C_{10}$ alkyl, or hydroxyl.

4. An oxygen-permeable lens as claimed in Claim 3, in which the UV-absorbing agent comprises a monomer selected from the group consisting of 2-hydroxy-4-(2-methacryloyloxyethoxy)benzophenone, 2-hydroxy-4-(2-acryloyloxyethoxy)benzophenone, 2-hydroxy-4- (2-hydroxy-3-methacryloxypropyl)benzophenone, 2-(2-hydroxy-5-vinylphenyl)-2H-benzotriazole, and mixtures thereof.

5. An oxygen-permeable lens as claimed in any preceding claim, in which the organosilicon monomer is present in a concentration of from 15 to 30 percent by weight.

6. An oxygen-permeable lens as claimed in any preceding claim in which the oxygen permeability is at least $15 \times 10^{-11}$(cm²/sec.)(ml $O_2$/ml × mm Hg).

7. An oxygen-permeable lens as claimed in any preceding claim, in which the lens has a Shore D hardness of at least 78.

8. An oxygen-permeable lens as claimed in Claim 7, in which the lens has a Shore D hardness of from 80 to 85.

9. An oxygen-permeable lens as claimed in any preceding claim, in which the fluoroorgano monomer is 2,2,2-trifluoroethylmethacrylate, hexafluorobutylmethacrylate or hexafluoroisopropylmethacrylate, or a mixture thereof.

10. An oxygen-permeable lens as claimed in any preceding claim, in which the hydrophilic monomer is methacrylic acid.

## Ansprüche

1. Sauerstoffdurchlässige Linse, die aus einem Copolymer gebildet ist, das aus

a) einem Organosilikonmonomersystem besteht, das in einer Menge von 10 bis 40 Gew.-% vorliegt, und wenigstens ein Monomer umfaßt, das aus der Gruppe gewählt ist, die aus ungesättigtem Organosilikonmonomer ausgewählt aus Alkyl- oder Arylsiloxanen besteht, die eine oder mehrere ungesättigte polymerisierbare Gruppe(n) der Formel

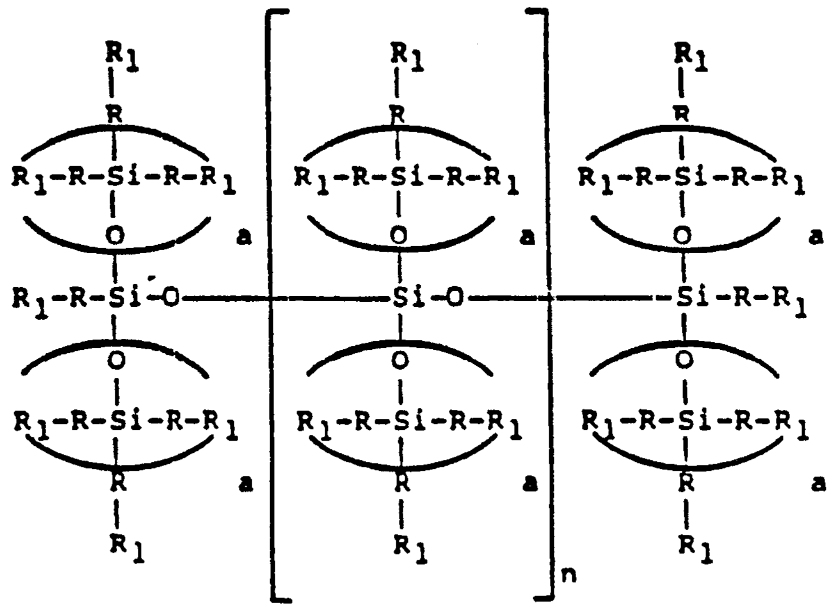

enthalten, worin

jedes $R_1$ unabhängig aus einem ungesättigten polymerisierbaren Methacrylat, Acrylatgruppe, Wasserstoff, Acetoxy, Carbomethoxy, Glycidoxy, Glyceryl und Carboxy gewählt ist und in dem wenigstens ein $R_1$ Acetoxy, Carbomethoxy, Glycidoxy, Glyceryl oder Carboxy ist;

jedes R unabhängig eine Alkylen- oder Cycloalkylengruppe mit 1 bis 10 C-Atomen oder eine Arylengruppe ist;

jedes a unabhängig eine ganze Zahl von 0 bis 10 ist; und n eine ganze Zahl von 0 bis 10 ist Siloxylalkylester der Formel

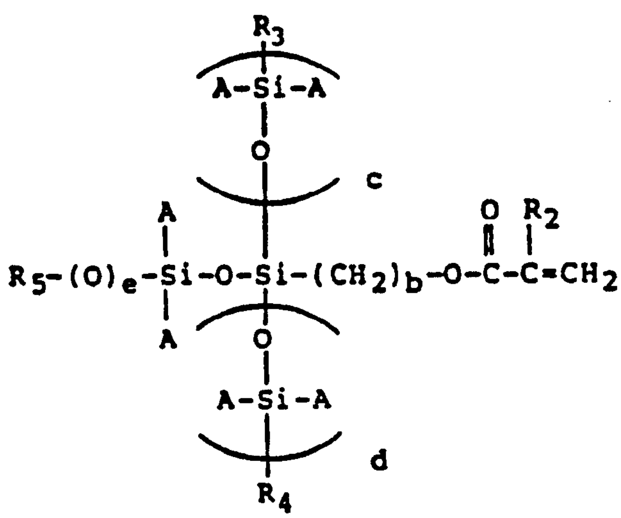

worin

$R_2$ aus der Gruppe gewählt ist, die aus Wasserstoff und Methyl besteht;

b eine ganze Zahl von 1 bis 3 ist;

c und d 0, 1 oder 2 bedeuten;

e für 0 oder 1 steht; und

A, $R_3$, $R_4$ und $R_5$ aus der Gruppe gewählt sind, die aus Methyl und Phenyl besteht, und/oder

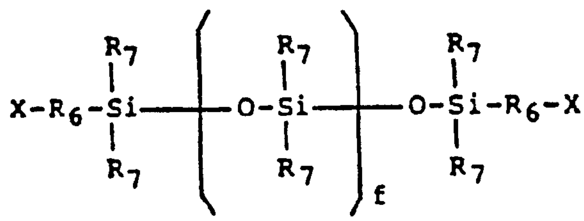

worin

X eine ungesättigte Gruppe darstellt;

$R_6$ ein zweiwertiger Kohlenwasserstoffrest mit 1 bis 22 C-Atomen ist;

$R_7$ gleich oder verschieden ist und jedes aus der Gruppe gewählt ist, die aus einem einwertigen Kohlenwasserstoffrest mit 1 bis 12 C-Atomen besteht und aus einem halogensubstituierten einwertigen Kohlenwasserstoffrest mit 1 bis 12 C-Atomen besteht; und

f für 0 oder eine größere Zahl steht;

b) wenigstens ein hydrophiles Monomer, das in einer Menge vorliegt, die ausreicht, um im entstandenen Polymer einen Kontaktwinkel von weniger als 45° zu schaffen;

c) wenigstens ein vernetzendes Monomer, wobei die Gesamtmenge an vernetzendem Monomer bis zu 5 Gew.-% bezogen auf das Gesamtgewicht der Monomere beträgt;

d) wenigstens ein Fluororganomonomer der Formel

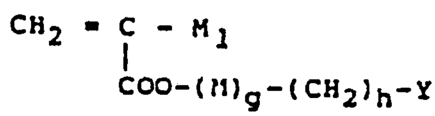

worin

$M_1$ Wasserstoff, Alkyl; Fluoralkyl, Alkylcarboxy, Carboxyester, Alkylcarboxyester, fluorierter Carboxyester, fluoriertes Cyano, Alkylcarboxyester oder Phenyl ist;

M für Hydroxyalkyl, Alkyläther oder Hydroxyalkyläther steht;

g 0 oder 1 ist;

h 0 bis 4 bedeutet; und

Y für eine Fluorkohlenstoffgruppe steht, die vorzugsweise etwa 2 bis 21 Fluoratome enthält;

(e) gegebenenfalls ein oder mehrere zusätzliche(s) Monomer(e), um die Eigenschaften der Linse abzuändern, in einer Menge, die 50 Gew.-% der Konzentration des Fluororganomonomers nicht übersteigt; und

(f) 0 bis 20 Gew.-% wenigstens eines UV-absorbierenden Mittels;

worin die genannten Prozentsätze auf das Gesamtgewicht der Monomere und des gegebenenfalls vorhandenen UV-absorbierenden Mittels bezogen sind.

2. Sauerstoffdurchlässige Linse nach Anspruch 1, in der wenigstens ein UV-absorbierendes Mittel in einer Menge von 0,1 bis 20 Gew.-% bezogen auf das Gewicht des UV-absorbierenden Mittels und der Monomere vorhanden ist.

3. Sauerstoffdurchlässige Linse nach Anspruch 1 oder 2, in der das UV-absorbierende Mittel eine polymerisierte Menge wenigstens eines Monomers enthält, das aus der Gruppe gewählt ist, die aus einem Hydroxybenzophenon oder Benzotriazol der Formel

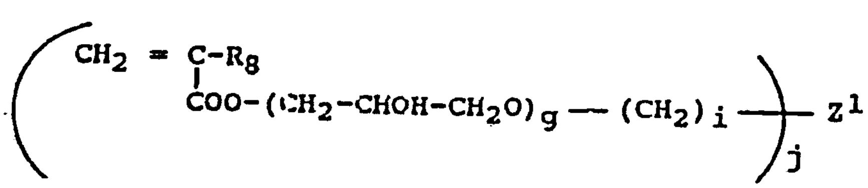

besteht, worin $R_8$ für Wasserstoff oder Methyl steht, g 0 oder 1 ist, i aus 1 bis 4 gewählt ist, j 1 oder 2 darstellt und $Z^1$

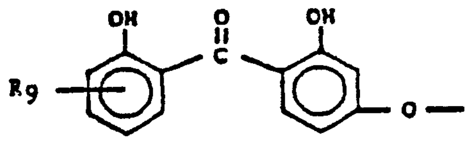 ;

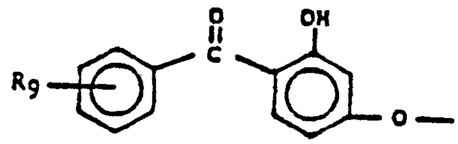 ; oder 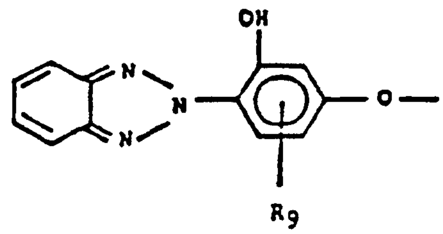

ist, worin $R_9$ Wasserstoff, Alkyl oder Hydroxy ist; und ein Phenylbenzotriazol der Formel

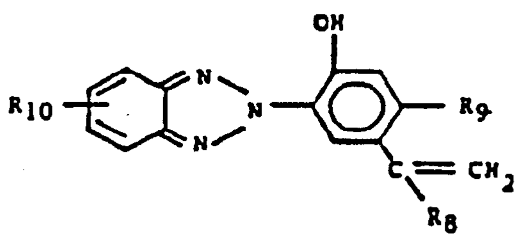

worin $R_8$ und $R_8$ die vorstehend angeführte Bedeutung besitzen und $R_{10}$ für H, Alkyl, vorzugsweise ein $C_1$-$C_{10}$-Alkyl, oder Hydroxyl steht.

4. Sauerstoffdurchlässige Linse nach Anspruch 3, in der das UV-absorbierende Mittel ein Monomer umfaßt, das aus der Gruppe gewählt ist, die aus
2-Hydroxy-4-(2-methacryloyloxyäthoxy)benzophenon,
2-Hydroxy-4-(2-acryloyloxyäthoxy)benzophenon,
2-Hydroxy-4-(2-hydroxy-3-methacryloxypropyl)benzophenon,
2-(2-Hydroxy-5-vinylphenyl)-2H-benzotriazol und Mischungen derselben besteht.

5. Sauerstoffdurchlässige Linse nach einem der vorhergehenden Ansprüche, in der das Organosilikonmonomer in einer Konzentration von 15 bis 30 Gew.-% vorliegt.

6. Sauerstoffdurchlässige Linse nach einem der vorhergehenden Ansprüche, in der die Sauerstoffdurchlässigkeit wenigstens $15 \times 10^{-11}$ ($cm^2$/sec) (ml $O_2$/ml × mm Hg)beträgt.

7. Sauerstoffdurchlässige Linse nach einem der vorhergehenden Ansprüche, in der die Linse eine Shore D-Härte von wenigstens 78 aufweist.

8. Sauerstoffdurchlässige Linse nach Anspruch 7, in der die Linse eine Shore-D-Härte von 80 bis 85 besitzt.

9. Sauerstoffdurchlässige Linse nach einem der vorhergehenden Ansprüche, in der das Fluororganomonomer 2,2,2-Trifluoräthylmethacrylat, Hexafluorbutylmethacrylat oder Hexafluorisopropylmethacrylat oder eine Mischung derselben ist.

10. Sauerstoffdurchlässige Linse nach einem der vorhergehenden Ansprüche, in der das hydrophile Monomer Methacrylsäure ist.

**Revendications**

1. Une lentille perméable à l'oxygène, formée d'un copolymère consistant en :

a) un système monomère d'organosilicone présent en une quantité allant de 10 à 40% en poids, qui comprend au moins un monomère choisi dans le groupe consistant en un monomère d'organosilicone insaturé choisi parmi les siloxanes d'alkyl ou d'aryl contenant un ou plusieurs groupe(s) polymérisables insaturés de formule :

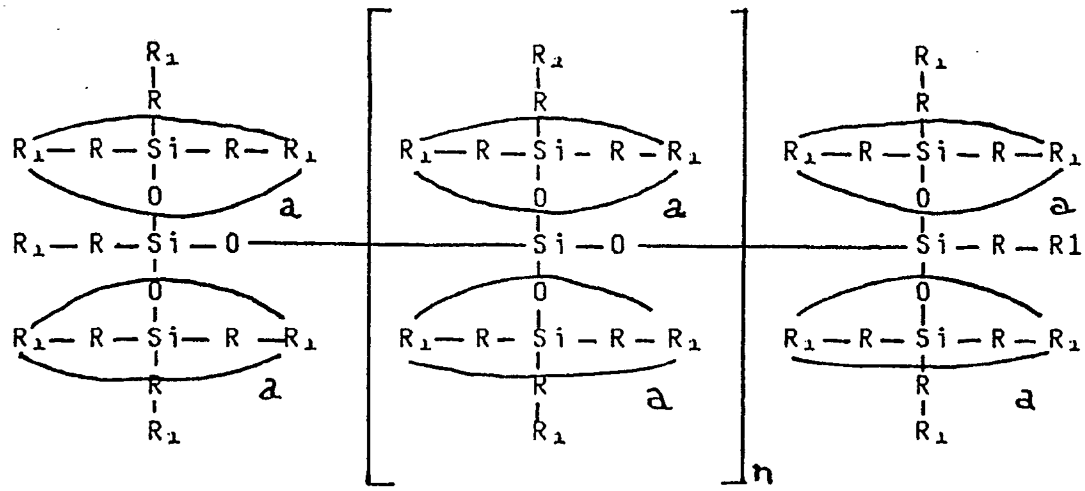

dans lequel :

chaque $R_1$ est choisi indépendamment parmi un méthacrylate poymérisable insaturé, un groupe acrylate, l'hydrogène, un acetoxy, un carbométhoxy, un glycidoxy, un glyceryl et un carboxy et dans lequel au moins un $R_1$ est un acetoxy, un carbométhoxy, un glycidoxy, un glyceryl ou un carboxy ;

chaque R est indépendamment un groupe alkylène ou cycloalkylène, présentant de 1 à 10 atomes de carbone, ou un groupe arylène ;

chaque a est indépendamment un nombre entier valant de 0 à 10 ; et

n est un nombre entier valant de 0 à 10, des esters siloxyl alkyl de formule :

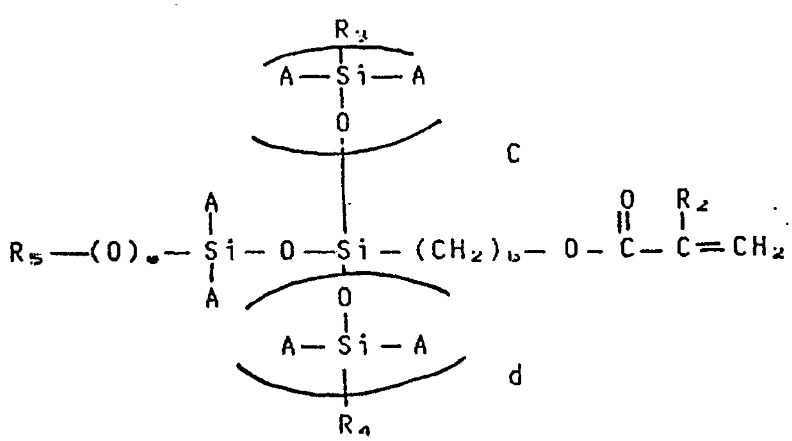

dans lesquels $R_2$ est choisi dans le groupe consistant en l'hydrogène et le radical méthyl ;

b est un nombre entier valant de 1 à 3 ;

c et d ont pour valeur 0,1 ou 2 ;

e est 0 ou 1 ; et

A, $R_3$, $R_4$ et $R_5$ sont choisis dans le groupe consistant en radical méthyl et phényl et/ou

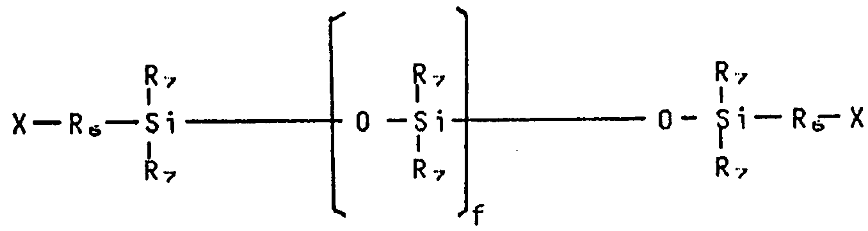

dans lequel :

X est un groupe insaturé ;

$R_6$ est un hydrocarbone divalent comportant de 1 à 22 atomes de carbone ;

$R_7$ lui est identique ou différent, et chacun étant choisi dans le groupe consistant en un radical d'hydrocarbone monovalent comportant de 1 à 12 atomes de carbone, et un radical d'hydrocarbone monovalent à halogène substitué présentant de 1 à 12 atomes de carbone ; et

f valant 0 ou plus ;

b) au moins un monomère hydrophile présent en une quantité suffixante pour produire dans le polymère résultant un angle de contact inférieur à 45° ;

c) au mois un monomère réticulant, le total de monomère réticulant présente en quantité allant jusqu'à 5% en poids basé sur le poids total des monomères ;

d) au moins un monomère fluoroorganique de formule

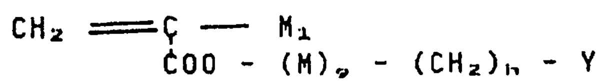

dans lequel

$M_1$ est l'hydrogène, un alkyl, un fluoroalkyl, un alkyl carboxy, un carboxy ester, un alkyl carboxy ester, un carboxy ester fluoré, un cyano fluoré, un alkyl carboxy ester, ou un phényl ;

M est un hydroxyl akyl, un alkyl éther, ou un hydroxy alkyl éther :

g vaut 0 ou 1 ;

h vaut de 0 à 4 ; et

Y est un groupe fluorocarboné, de préférence contenant de 2 à 21 atomes de fluor ;

e) en option, un ou plusieurs monomères additionnels pour modifier les propriétés de la lentille, en quantité ne dépassant pas 50% en poids de la concentration du monomère fluoroorganique ; et

f) de 0 à 20% en poids au total d'au mois un agent absorbant des UV ;

dans lequel lesdites pourcentages sont basés sur le poids total présent de monomères et d'agent absorbant des UV, s'il y en a.

2. Une lentille perméable à l'oxygène selon la revendication 1, dans laquelle au moins un agent absorbant les UV est présent en une quantité comprise entre 0,1 à 20% en poids, basée sur le poids de l'agent absorbant les UV et des monomères.

3. Une lentille perméable à l'oxygène selon la revendication 1 ou 2, dans laquelle l'agent absorbant les UV comprend une quantité polymérisée d'au moins un monomère choisi dans le groupe constitué de l'hydroxybenzophénone ou du benzotriazole de formule :

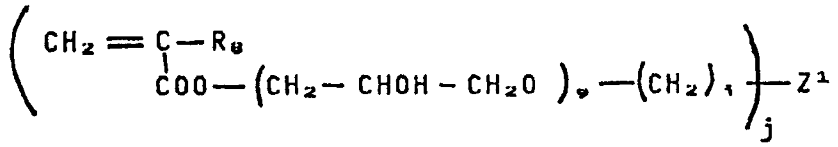 (5)

dans lequel $R_8$ est l'hydrogène ou un radical méthyl, g est égal à 0 ou à 1, i est choisi de 1 à 4, j est égal à 1 ou 2 et $Z^1$ est :

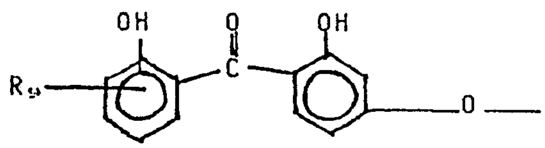 ;

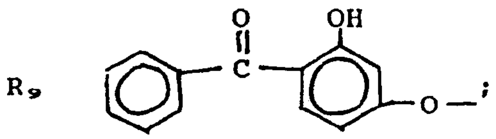 ; ou 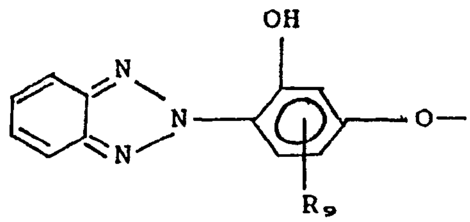

dans lequel $R_9$ est l'hydrogène, un radical alkyl ou hydroxy ; et un benzotriazole de formule :

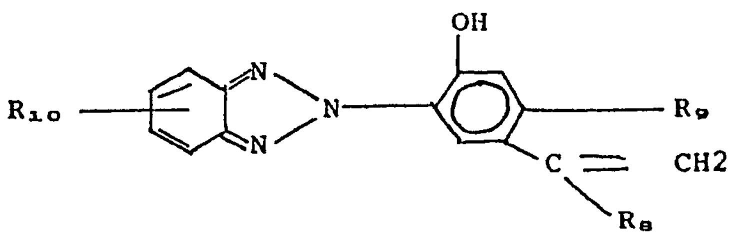

dans lequel $R_8$ et $R_9$ sont tels que définis ci-dessus et $R_{10}$ est H, un alkyl, de préférence un alkyl en $C_1$-$C_{10}$, ou un hydroxyl.

4. Une lentille perméable à l'oxygène selon la revendication 3, dans laquelle l'agent absorbant les UV comprend un monomère choisi dans le groupe formé par le 2- hydroxy-4-(2-méthacryloyloxyéthoxy)benzophénone, le 2- hydroxy-4-(2-acryloyloxyétoxy)benzophénone, le 2-hydroxy- 4-(2-hydroxy-3-méthacryloxypropyl)benzophénone, le 2-(2- hydroxy-5-vinylphényl)-2H-benzotrialzole, et des mélanges de ceux-ci.

5. Une lentille perméable à l'oxygène selon l'une quelconque des revendications précédentes, dans laquelle le monomère d'organosilicone est présent en une concentration de 15 à 30% en poids.

6. Une lentille perméable à l'oxygène selon l'une quelconque des revendications précédentes, dans laquelle la perméabilité à l'oxygène est au moins de $15 \times 10^{-11}$ ($cm^2$/sec)(ml $O_2$/ml × mm Hg).

7. Une lentille perméable à l'oxygène selon l'une quelconque des revendications précédentes, dans laquelle la lentille présente une dureté Shore D d'au moins 78.

8. Une lentille perméable à l'oxygène selon la revendication 7, dans laquelle la lentille présente une dureté D comprise dans la plage allant 80 à 85.

9. Une lentille perméable à l'oxygène selon l'une quelconque des revendications précédentes, dans laquelle le monomère fluoroorganique est le 2,2,2-trifluoroéthylmé-thacrylate, l'hexafluorobutylméthacrylate ou l'hexafluoroisopropylméthacrylate, ou un mélange de ceux-ci.

10. Une lentille perméable à l'oxygène selon l'une quelconque des revendications précédentes, dans laquelle le monomère hydrophile est l'acide méthacrylique.